# EUROPÄISCHE PATENTANMELDUNG

(11) **EP 1 785 314 A1**
(43) Veröffentlichungstag der Anmeldung: **16.05.2007**
(21) Anmeldenummer: 06021364.2
(22) Anmeldetag: 11.10.2006
(51) Int. Cl.: B60R 7/04, B60N 3/10

(54) **Staufach für Kraftfahrzeuge**

(30) Priorität: 10.11.2005 DE 102005053577
(71) Anmelder: Bayerische Motoren Werke Aktiengesellschaft, 80809 München (DE)
(72) Erfinder: Biedebach, Jens, 49205 Hasbergen (DE)

(57) **Zusammenfassung**

Erfindungsgemäß weist ein Staufach (1) für Kraftfahrzeuge auf der Oberseite mindestens eine Abdeckung (3,4) mit mindestens einer Ausnehmung (5,8) auf. Am Rand der Ausnehmung (5,8) ist mindestens ein flächiger Abschnitt (6,9) aus einem elastischen Material angebracht, der in die Ausnehmung (5,8) hineinragt. Wenn ein Gegenstand (7) in dem Staufach (1) abgelegt werden soll, dessen Abmessungen größer als die verbleibende Öffnung in der Abdeckung (3,4) ist, muss dazu der mindestens eine flächige Abschnitt (6,9) aus dem elastischen Material zur Seite oder nach unten gedrückt werden, damit die Öffnung groß genug wird. Wenn dabei der Gegenstand (7) höher als das Staufach (1) ist, ragt er nach oben über die Öffnung hinaus. In dieser Stellung bleibt der flächige Abschnitt (6,9) aus dem elastischen Material in seiner zur Seite oder nach unten gedrückten Stellung und drückt permanent gegen den Gegenstand (7), da er wieder seine Ursprungslage einnehmen will.

## Beschreibung

Die Erfindung betrifft ein Staufach für Kraftfahrzeuge nach dem Oberbegriff des Patentanspruchs 1.

Aus der DE 197 08 070 A1 ist ein Staufach für Kraftfahrzeuge bekannt, das ein Rollo mit steifen Lamellen zum wahlweisen Freigeben und Absperren seiner oberen Seite aufweist. In dem Staufach kann ein Einsatz angeordnet sein, in welchem Durchbrechungen zur Aufnahme von Gegenständen vorgesehen sind.

Aufgabe der Erfindung ist es, ein Staufach für Kraftfahrzeuge zu schaffen, in dem unterschiedlich große Gegenstände sicher transportiert werden können.

Diese Aufgabe wird mit einem Staufach für Kraftfahrzeuge mit den Merkmalen des Patentanspruchs 1 gelöst.

Erfindungsgemäß weist ein Staufach für Kraftfahrzeuge auf der Oberseite mindestens eine Abdeckung mit mindestens einer Ausnehmung auf. Am Rand der Ausnehmung ist mindestens ein flächiger Abschnitt aus einem elastischen Material angebracht, der in die Ausnehmung hineinragt. Wenn ein Gegenstand in dem Staufach abgelegt werden soll, dessen Abmessungen größer als die verbleibende Öffnung in der Abdeckung ist, muss dazu der mindestens eine flächige Abschnitt aus dem elastischen Material zur Seite oder nach unten gedrückt werden, damit die Öffnung groß genug wird. Wenn dabei der Gegenstand höher als das Staufach ist, ragt er nach oben über die Öffnung hinaus. In dieser Stellung bleibt der flächige Abschnitt aus dem elastischen Material in seiner zur Seite oder nach unten gedrückten Stellung und drückt permanent gegen den Gegenstand, da er wieder seine Ursprungslage einnehmen will. Dadurch wird der Gegenstand auf der dem flächigen Abschnitt gegenüberliegenden Seite gegen den Rand der Öffnung oder gegen einen weiteren flächigen Abschnitt aus einem elastischen Material gedrückt. Auf diese Weise ist der Gegenstand in der Öffnung fixiert, die Öffnung mit dem zumindest einem flächigen Abschnitt dient also als Halterung. Diese Halterung ist für unterschiedlich große Gegenstände gleichermaßen geeignet. Je nach Größe des zu haltenden Gegenstandes muss nur der zumindest eine flächige Abschnitt mehr oder weniger zur Seite oder nach unten weggedrückt werden.

Der zumindest eine flächige Abschnitt kann beispielsweise aus Gummi bestehen. Gummi ist bekannt für seine elastischen Eigenschaften. Ein flächiger Abschnitt aus Gummi lässt sich beim Einführen des Gegenstands in die Öffnung leicht zur Seite oder nach unten wegdrücken. Umgekehrt liegt der flächige Abschnitt zur Fixierung aber auch mit einer relativ hohen Haftreibung dann am Gegenstand an und fixiert diesen so sicher. Alternativ kann der flächige Abschnitt auch aus Leder oder Stoff bestehen, der dann mit PUR-Schaum hinterspritzt sein kann. Ein solcher Abschnitt weist ein hochwertiges optisches Erscheinungsbild auf. Genauso geeignet als flächiger Abschnitt ist aber auch ein Metallstreifen aus einem Federstahl, der innerhalb des zulässigen Federwegs ebenfalls elastisch ist.

Bevorzugt ist der flächige Abschnitt umlaufend am Rand der Ausnehmung angebracht und erstreckt sich über die gesamte Ausnehmung. Zur Einführung des zumindest einen zu haltenden Gegenstandes weist der flächige Abschnitt zumindest einen Schlitz auf, durch den der zu haltende Gegenstand in das Staufach hinein geschoben werden kann. Dabei werden die angrenzenden Bereiche des flächigen Abschnitts elastisch zur Seite gedrückt. Sofern der Gegenstand höher als das Staufach ist, fixieren die zur Seite gedrückten Bereiche den Gegenstand in der Öffnung.

Günstigerweise ist mindestens eine Abdeckung auf der Oberseite des Staufachs verschiebbar. Dadurch bietet das Staufach eine besonders hohe Variabilität. Der Kunde kann diese Ablage als normales Ablagefach nutzen oder mit der Abdeckung zur Halterung eines Gegenstandes verwenden. Ein geeigneter Gegenstand kann beispielsweise eine Getränkedose, eine Flasche, ein Mobiltelefon, ein PDA, ein i-Pod, oder ähnliches sein. Auch kann das Staufach zusammen mit der mindestens einen Abdeckung durch ein Rollo auf der Oberseite verdeckbar sein. So können die Gegenstände im Staufach bei Bedarf vor neugierigen Blicken geschützt werden. Auch erhält der Fahrzeuginnenraum so ein optisch ansprechenderes Erscheinungsbild.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht eines Staufachs mit zwei verschiebbaren Abdeckungen und
- Fig. 2: eine weitere perspektivische Ansicht des Staufachs von Fig. 1, in dem ein Mobiltelefon gehalten ist.

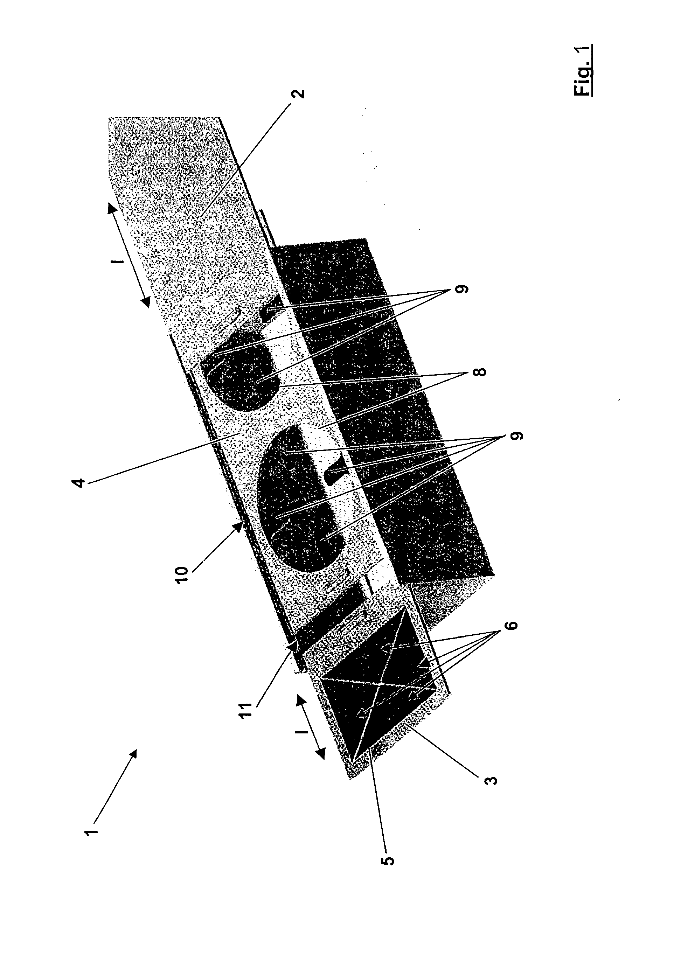

In Fig. 1 ist ein Staufach 1 im Innenraum eines Personenkraftwagens im Bereich einer Mittelkonsole dargestellt. Das Staufach 1 weist an zwei gegenüberliegenden oberen Rändern je eine obere und eine untere Führungsschiene 10 und 11 auf. In den beiden einander gegenüberliegenden oberen Führungsschienen 10 ist ein Rollo 2 zum Abdecken des gesamten Staufachs 1 in Längsrichtung I geführt. In den beiden unteren Führungsschienen 11 befinden sich nebeneinander eine kleine und eine große Abdeckung 3 und 4, die in den unteren Führungsschienen 11 ebenfalls in Längsrichtung I verschiebbar sind. So kann das Staufach 1 oben teilweise durch die kleine Abdeckung 3 oder teilweise durch die große Abdeckung 4 oder vollständig durch die kleine und die große Abdeckung 3 und 4 oder durch das Rollo 2 verschlossen werden.

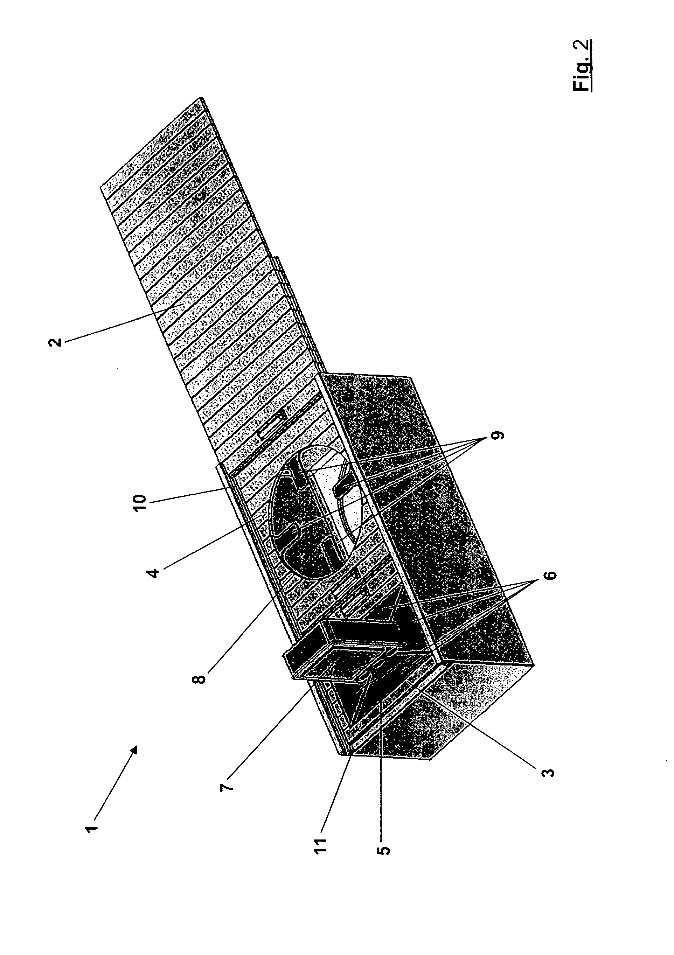

Die kleine Abdeckung 3 weist eine große rechteckige Ausnehmung 5 auf. An jedem der vier Seitenränder der Ausnehmung 5 ist ein dreieckiger flächiger Abschnitt 6 aus elastischem Gummi angebracht, der in die Ausnehmung 5 hineinragt. Die vier flächigen Abschnitte 6 verdecken gemeinsam die Ausnehmung 5 vollständig, sodass nur mehr schmale Fugen zwischen den flächigen Abschnitten 6 sichtbar sind. Jeder der Abschnitte 6 kann leicht nach unten gedrückt werden, sodass die Ausnehmung 5 zumindest teilweise offen ist. So kann beispielsweise wie in Fig. 2 dargestellt ein Mobiltelefon 7 durch die Ausnehmung 5 in das Staufach 1 hineingesteckt werden. Die flächigen Abschnitte 6 werden dabei elastisch nach unten in das Staufach 1 hinein gedrückt, sodass eine Öffnung entsteht, die groß genug für das Mobiltelefon 7 ist. Beim Hineinstecken streifen die Abschnitte 6 dabei am Mobiltelefon 7. Wenn das Mobiltelefon 7 höher als das Staufach 1 ist, ragt es durch die Ausnehmung 5 der kleinen Abdeckung 3 nach oben aus dem Staufach 1 heraus. Dabei ist das Mobiltelefon 7 durch die flächigen Abschnitte 6 im Staufach 1 sicher gehalten, die elastisch am Mobiltelefon 7 anliegen. So kann das Mobiltelefon 7 nicht unerwünschterweise in dem Staufach 1 hin- und herfallen oder klappern. Auf gleiche Weise kann jeder Gegenstand im Staufach durch die flächigen Abschnitte 6 gehalten werden, der zumindest etwas höher als das Staufach 1 ist, sodass er durch die kleine Abdeckung 3 nach oben über das Staufach 1 hinausragt. Durch die flächigen Abschnitte 6 können auch unterschiedlich große Gegenstände sicher in der Ausnehmung 5 gehalten werden, da die flächigen Abschnitte 6 unterschiedlich stark nach unten oder zur Seite gedrückt werden können.

Die große Abdeckung 4 weist zwei kreisrunde Aussparungen 8 auf. Umlaufend gleichmäßig verteilt ragen vom Rand der Aussparungen 8 her jeweils vier Streifen 9 aus einem Federstahl in die Aussparungen 8 hinein. Diese Streifen 9 aus Federstahl können gegen die Federkraft elastisch nach unten gedrückt werden. Wenn nun beispielsweise eine Getränkedose durch eine der Aussparungen 8 in das Staufach 1 hinein gesteckt wird, werden die umgebenden Streifen 9 aus Federstahl federnd nach unten gedrückt, bis die freie Öffnung in der Aussparung 8 groß genug für die Getränkedose ist. Wenn nun die Getränkedose höher als das Staufach 1 ist, ragt sie über dieses durch die Aussparung 8 nach oben hinaus. Die vier Streifen 9 aus Federstahl liegen dabei vorgespannt an der Getränkedose an und halten diese in ihrer Position. Auch hier können unterschiedlich große Gegenstände oder Flaschen sicher gehalten werden. Je nach Größe werden die Streifen 9 unterschiedlich stark nach unten gedrückt. Entscheidend für einen sicheren Halt ist nur, dass zumindest ein Streifen 9 beim Einführen des Gegenstands weggedrückt werden muss, sodass er vorgespannt am Gegenstand anliegt. Umgekehrt darf natürlich keiner der Streifen 9 über den maximal zulässigen Federweg hinaus weggedrückt werden, da es ansonsten zu einer plastischen Verformung der Streifen 9 käme.

Um das optische Erscheinungsbild der Abdeckungen 3 und 4 zu verbessern, sind diese zusammen mit den flächigen Abschnitten 6 bzw. zusammen mit den Streifen 9 mit einem dekorativen Material, wie beispielsweise mit Leder, überzogen. So können die Abdeckungen 3 und 4 an das Erscheinungsbild der an das Staufach 1 angrenzenden Fahrzeugbauteile angepasst sein. Zudem ermöglicht es das Rollo 2, das gesamte Staufach 1 zu verschließen, sodass nur mehr das Rollo 2 selber zu sehen ist.

Wenn dagegen das Staufach 1 als konventionelles Staufach 1 verwendet werden soll, können die beiden Abdeckungen 3 und 4 einfach in Längsrichtung I des Staufachs 1 soweit zur Seite geschoben werden, dass sie die Oberseite des Staufachs 1 vollständig freigeben. So ist das Staufach 1 in seiner gesamten Größe uneingeschränkt als klassisches, oben offenes Staufach nutzbar.

## Patentansprüche

1. Staufach (1) für Kraftfahrzeuge, das auf der Oberseite mindestens eine Abdeckung (3, 4) mit mindestens einer Ausnehmung (5, 8) aufweist, wobei am Rand der Ausnehmung (5, 8) mindestens ein flächiger Abschnitt (6, 9) aus einem elastischen Material angebracht ist, der in die Ausnehmung (5, 8) hineinragt.

2. Staufach nach Anspruch 1, **dadurch gekennzeichnet, dass** das elastische Material aus Gummi besteht.

3. Staufach nach Anspruch 1, **dadurch gekennzeichnet, dass** das elastische Material aus Leder oder Stoff besteht, das oder der mit PUR-Schaum hinterspritzt ist.

4. Staufach nach einem der vorhergehenden Ansprüche, **dadurch gekennzeichnet, dass** der flächige Abschnitt (6) umlaufend am Rand der Ausnehmung (5) angebracht ist und sich über die gesamte Ausnehmung (5) erstreckt.

5. Staufach nach Anspruch 1, **dadurch gekennzeichnet, dass** der mindestens eine flächige Abschnitt (9) aus einem Streifen aus Federstahl besteht.

6. Staufach nach einem der vorhergehenden Ansprüche, **dadurch gekennzeichnet, dass** mindestens eine Abdeckung (3, 4) auf der Oberseite des Staufachs (1) verschiebbar ist.

7. Staufach nach einem der vorhergehenden Ansprüche, **dadurch gekennzeichnet, dass** das Staufach (1) zusammen mit der mindestens einen Abdeckung (3, 4) durch ein Rollo (2) auf der Oberseite verdeckbar ist.
